# DEMANDE DE BREVET EUROPEEN

(11) **EP 2 902 649 A1**
(43) Date de publication de la demande: **05.08.2015**
(21) Numéro de dépôt: 15151423.9
(22) Date de dépôt: 16.01.2015
(51) Int. Cl.: F16D 13/75, F16D 13/58

(54) **Mécanisme d'embrayage à rondelle d'assistance jonc à pattes d'assistances étagées**

(30) Priorité: 30.01.2014 FR 1450743; 30.01.2014 FR 1450758
(71) Demandeur: Valeo Embrayages, 80009 Amiens Cedex 2 (FR)
(72) Inventeur: Brailly, Julien, 80260 Naours (FR)
(74) Mandataire: Cardon, Nicolas

(57) **Abrégé**

L'invention concerne un mécanisme d'embrayage (1) comportant un couvercle (2) ; un plateau de pression (5) ; un diaphragme (3) adapté à basculer entre une position embrayée et une position débrayée pour déplacer le plateau de pression (5) par rapport au couvercle (2), le diaphragme (3) pivotant autour d'une première (6) zone d'appui située entre le diaphragme (3) et le couvercle (2) ; une rondelle d'assistance (16) avec des pattes d'assistance (19) déformables élastiquement. La rondelle d'assistance (16) est en appui sur le couvercle (2) et présente une zone (22) en saillie formant la première zone d'appui (6) du diaphragme (3). Les sommets des pattes d'assistance sont répartis dans des plans décalés axialement dans le mécanisme d'embrayage (1).

## Description

La présente invention concerne un mécanisme d'embrayage, notamment pour véhicule automobile.

Dans un véhicule automobile, l'embrayage est destiné à coupler en rotation un arbre moteur, tel par exemple qu'un vilebrequin, et un arbre d'entrée d'une boîte de vitesses. L'embrayage comprend habituellement un mécanisme comportant un couvercle dans lequel est logé un diaphragme annulaire basculant entre une position embrayée et une position débrayée de manière à déplacer un plateau de pression. Le diaphragme pivote autour respectivement d'une première et d'une seconde zones d'appui s'étendant circonférentiellement et situées de part et d'autre du diaphragme, respectivement entre le diaphragme et le couvercle et entre le diaphragme et le plateau de pression. Le couvercle, le diaphragme et le plateau de pression sont solidaires en rotation.

Un tel mécanisme est décrit par exemple dans le document EP-A-2 048 397 au nom de la Demanderesse. Dans ce document, la première zone d'appui est formée par une zone annulaire en saillie venant de matière avec le couvercle. Le diaphragme annulaire forme ainsi un levier articulé autour des deux zones d'appui et comporte à sa périphérie radialement interne des doigts radiaux coopérant avec une butée d'embrayage, ou « butée d'actionnement », dont le déplacement entraîne le basculement du diaphragme entre ses positions embrayée et débrayée. La périphérie externe du diaphragme permet quant à elle de déplacer le plateau de pression.

La butée d'embrayage est commandée par exemple par un actionneur piloté par un calculateur électronique afin d'exercer une force prédéterminée sur le diaphragme et de le déplacer sur une distance donnée. En variante, la butée d'embrayage est commandée par l'action d'un conducteur sur une pédale d'embrayage.

Le plateau de pression, sollicité par le diaphragme, est destiné à serrer un disque de friction sur un plateau de réaction coaxial au plateau de pression et au disque de friction.

Le disque de friction est lié en rotation à l'arbre d'entrée de la boîte de vitesses et le plateau de réaction est solidaire en rotation du couvercle et d'un volant lié à l'arbre moteur. Ainsi, le serrage d'un disque de friction entre les plateaux de pression et de réaction permet la transmission d'un couple entre l'arbre moteur et l'arbre d'entrée de la boîte de vitesses.

L'utilisation de l'embrayage provoque une usure des garnitures du disque de friction et des contre-matériaux des plateaux de pression et de réaction associés. Ceci se traduit par une variation de la position du plateau de pression par rapport au diaphragme et/ou au plateau de réaction associé, générant une variation de l'effort de serrage du disque de friction et/ou une modification du point de léchage et de la course de la butée d'embrayage. On rappelle que le point de léchage est la position à partir de laquelle une partie du couple du moteur est transmise à l'arbre de la boîte de vitesses lors de la fermeture de l'embrayage.

Le document FR-A-2 847 626, au nom de la Demanderesse, propose un embrayage équipé de moyens de rattrapage d'usure interposés entre un plateau de pression et un diaphragme monté sur un couvercle fixé à un plateau de réaction. Ces moyens de rattrapage d'usure permettent de conserver la position du diaphragme sensiblement constante malgré l'usure des garnitures de friction du disque de friction ainsi que des contre-matériaux des plateaux de pression et de réaction associés.

Dans le document EP-A-2 048 397 précité, le mécanisme d'embrayage est également équipé de tels moyens de rattrapage d'usure.

Lorsque l'embrayage est équipé de tels moyens de rattrapage d'usure, le diaphragme est généralement soumis à des contraintes et à des efforts mécaniques importants lors des phases d'embrayage et de débrayage. En effet, ces moyens de rattrapage d'usure sont généralement utilisés pour des applications à fort couple moteur, nécessitant des efforts importants sur le plateau de pression.

Dans un tel cas également, la position du diaphragme reste constante et sa zone d'appui sur la zone annulaire en saillie du couvercle reste inchangée, ce qui favorise l'usure de cette zone en saillie.

Ainsi, lors d'une phase d'embrayage, la zone annulaire en saillie du couvercle servant à l'articulation du diaphragme est soumise à des contraintes mécaniques importantes et localisées qui peuvent provoquer son usure. En effet, dans la technique actuelle, le couvercle est réalisé dans un matériau présentant une dureté relativement faible, le couvercle devant être réalisé par emboutissage. Par conséquent, la zone annulaire en saillie venant de matière avec le couvercle a également une dureté faible.

Un tel phénomène d'usure induit un mauvais positionnement du diaphragme et engendre un décalage de la courbe caractéristique de l'embrayage. La courbe caractéristique de l'embrayage est la courbe représentant l'effort exercé sur la butée d'actionnement par le diaphragme, en fonction de la position de la butée d'actionnement le long de sa course. On assiste en particulier à une augmentation de l'effort au niveau de la butée d'embrayage et du plateau de pression. Ceci provoque l'apparition et la croissance d'une hystérésis dans la courbe d'effort exercé sur la butée d'actionnement du mécanisme d'embrayage. En d'autres termes, cela affecte le comportement et les performances de l'embrayage.

Ceci est à éviter, en particulier dans le cas d'un embrayage équipé de moyens de rattrapage d'usure où l'on considère que la position du diaphragme est maîtrisée.

Bien entendu, ce phénomène d'usure est également critique dans un mécanisme d'embrayage dépourvu de moyens de rattrapage d'usure.

Par ailleurs, le document DE-A-10 2010 054 288 propose un mécanisme d'embrayage dans lequel la première zone d'appui, située entre le couvercle et le diaphragme et servant à l'articulation du diaphragme, est formée par un jonc annulaire distinct du couvercle. Dans ce cas, il est possible de réaliser le jonc dans un matériau plus dur de manière que ce dernier puisse supporter les contraintes mécaniques appliquées par le diaphragme, notamment lors de la phase d'embrayage.

Dans ce cas toutefois, la zone de contact entre le jonc et le couvercle est limitée à un cercle, de sorte que le couvercle est soumis localement à des contraintes importantes, en particulier lors d'une phase d'embrayage, ce qui peut provoquer un enfoncement du jonc dans le couvercle et engendrer comme précédemment un mauvais positionnement du diaphragme. En outre, le montage du jonc entre le couvercle et le diaphragme, le centrage et le maintien de ce jonc sur le couvercle sont relativement fastidieux.

Par ailleurs, comme le jonc annulaire n'est pas arrêté en rotation, le jonc annulaire peut tourner par rapport au couvercle, notamment en position débrayée du mécanisme d'embrayage, où le jonc annulaire n'est pas soumis à la charge du diaphragme. Ces micro-mouvements relatifs du jonc annulaire par rapport au couvercle engendrent une usure prématurée du jonc annulaire.

L'invention a notamment pour but d'apporter une solution simple, efficace et économique aux problèmes susmentionnés.

Par ailleurs, la demande DE-A-10 2009 045 980 décrit un mécanisme d'embrayage de véhicule automobile, comportant un couvercle, un plateau de pression et un diaphragme logé entre le plateau de pression et le couvercle. Le mécanisme d'embrayage décrit dans ce document comporte également une rondelle d'assistance avec des pattes d'assistance destinées à venir en appui sur une butée d'embrayage servant à l'actionnement du diaphragme, pour augmenter l'effort appliqué sur la butée d'actionnement du diaphragme au voisinage de la position débrayée du diaphragme. Les pattes d'assistance peuvent présenter des distances aux doigts du diaphragme distinctes, ceci afin que l'effet de la rondelle d'assistance soit échelonnée sur la course de la butée d'embrayage. En outre, la rondelle d'assistance forme une zone d'appui du diaphragme, située entre le plateau de pression et le diaphragme.

Par ailleurs, la rondelle d'assistance qui porte les pattes d'assistances, est montée en appui sur des collerettes de rivets de fixation au couvercle. Par suite, l'utilisation du mécanisme d'embrayage selon ce document engendre une usure au niveau de la zone d'appui de la rondelle sur les collerettes des rivets qui sont en un matériau peu dur afin d'assurer le rivetage. L'usure de la zone d'appui provoque une modification de la position de la rondelle d'assistance par rapport au diaphragme. Notamment, la distance entre les pattes d'assistance et les doigts du diaphragme peut varier. Ceci provoque une modification de la fonction d'assistance de la rondelle d'assistance, l'effort exercée sur la butée d'actionnement pour un déplacement donné de la butée d'actionnement variant notamment au cours du temps.

L'invention propose, comme solution au problème susmentionné, un mécanisme d'embrayage, notamment pour véhicule automobile, comportant :
- un couvercle,
- un plateau de pression,
- un diaphragme logé dans le couvercle, le diaphragme étant adapté à basculer entre une position embrayée et une position débrayée pour déplacer le plateau de pression par rapport au couvercle, le diaphragme pivotant autour d'une première et d'une seconde zones d'appui situées respectivement entre le diaphragme et le couvercle et entre le diaphragme et le plateau de pression,
- une rondelle d'assistance avec au moins deux pattes d'assistance déformables élastiquement et destinées à venir en appui sur une butée d'embrayage servant à l'actionnement du diaphragme ou sur des doigts du diaphragme adaptés à coopérer avec la butée d'embrayage, pour augmenter l'effort appliqué sur la butée d'embrayage au voisinage de la position débrayée du diaphragme, la rondelle d'assistance étant en appui sur le couvercle et présentant au moins une zone en saillie formant la première zone d'appui du diaphragme, les sommets des pattes d'assistance, destinés à entrer en contact avec la butée d'embrayage ou des doigts du diaphragme, étant répartis dans au moins deux plans décalés dans la direction axiale du mécanisme d'embrayage pour que la rondelle d'assistance présente une raideur étagée sur la course de la butée d'embrayage provoquant le basculement du diaphragme depuis sa position embrayée jusqu'à sa position débrayée.

La rondelle d'assistance étant traditionnellement réalisée en un matériau plus noble que le matériau utilisé pour réaliser le couvercle, la position de la première zone d'appui est mieux assurée dans le temps quand celle-ci est formée par la rondelle d'assistance plutôt que par une projection depuis le couvercle. Par matériau plus noble, on entend un matériau plus résistant et/ou ayant subi un traitement, par exemple thermique tel qu'une trempe, permettant d'augmenter sa dureté.

La mise en oeuvre de la rondelle d'assistance pour réaliser la première zone d'appui est également avantageuse car l'usure de cette première zone d'appui est classiquement plus importante que l'usure de la seconde zone d'appui. Ceci est plus particulièrement vrai pour les mécanismes d'embrayage dépourvus de moyens de rattrapage d'usure, où cette usure provoque une variation de l'angle du diaphragme dans sa position embrayée.

En outre, l'utilisation de la rondelle d'assistance pour former cette zone d'appui permet de limiter le nombre de pièces nécessaires et facilite donc le montage du mécanisme d'embrayage, notamment par rapport à une solution consistant à mettre en oeuvre une rondelle distincte pour former la première zone d'appui.

Enfin, la mise en oeuvre d'une rondelle d'assistance dont les sommets des pattes d'assistances sont répartis dans des plans décalés dans la direction axiale du mécanisme d'embrayage permet d'augmenter l'effort appliqué sur la butée de commande au voisinage de la position débrayée du diaphragme de manière étagée. Ceci permet en effet d'obtenir une raideur de la charge d'assistance du mécanisme d'embrayage, ou « raideur de la rondelle d'assistance », qui varie sur le trajet de la butée de commande, notamment qui prends des valeurs distinctes en fonction du nombre de pattes d'assistance en contact avec les doigts du diaphragme ou directement la butée de commande. Ceci contribue à un meilleur confort d'utilisation du mécanisme d'embrayage par l'utilisateur. En effet, ceci permet d'avoir une raideur au voisinage de la position débrayée suffisamment importante pour éviter les risques que la pédale d'embrayage ne remonte plus, notamment aux hauts régimes moteurs, tout en limitant l'effort sur la butée de commande au voisinage de la position embrayée du diaphragme.

Selon des modes de réalisation particuliers, le mécanisme d'embrayage peut comporter une ou plusieurs des caractéristiques suivantes, prises seules ou en combinaison :
- la rondelle d'assistance comporte des trous pour le montage de moyens de fixation de ladite rondelle d'assistance sur le couvercle ;
- la rondelle d'assistance est montée axialement entre le couvercle et le diaphragme ;
- la zone en saillie est formée par emboutissage ;
- la zone en saillie est de forme annulaire continue ou de la forme d'un unique segment d'anneau ;
- la zone en saillie a la forme de segments d'anneau disjoints ;
- les segments d'anneau disjoints de la zone en saillie sont formés par des languettes disjointes, s'étendant radialement vers l'extérieur depuis une partie annulaire radialement externe de la rondelle d'assistance, dans laquelle sont formées, le cas échéant, les trous pour le montage de moyens de fixation de la rondelle d'assistance ;
- la seconde zone d'appui est formée par au moins un organe d'appui fixé au couvercle;
- l'organe d'appui a une section en C et comporte une première branche de fixation au couvercle et une seconde branche dont l'extrémité libre forme la seconde zone d'appui du diaphragme ;
- l'organe d'appui est élastique, de sorte que sa seconde branche tend à plaquer le diaphragme en appui contre la zone en saillie de la rondelle d'assistance ; et
- la rondelle d'assistance est fixée serrée au couvercle au moyen de rivets, de préférence de rivets de solidarisation du diaphragme sur le couvercle, de sorte que la rondelle d'assistance est de préférence serrée entre le couvercle et le diaphragme par ses faces opposées par les rivets, la première branche de l'organe d'appui étant interposée entre les collerettes des rivets et la rondelle d'assistance le cas échéant; on assure ainsi la position des pattes d'assistance, indépendamment de l'usure interne du mécanisme d'embrayage, ce qui permet de maîtriser avec précision l'assistance de la charge vue par la butée, tout au long de la durée de vie du mécanisme d'embrayage ;
- la rondelle d'assistance, fixée au couvercle, présente au moins une projection adaptée à coopérer avec le diaphragme pour limiter les déplacements du diaphragme dans un plan normal à une direction axiale du mécanisme d'embrayage;
- la au moins une projection s'étend depuis une partie de la rondelle de centrage du diaphragme radialement interne par rapport à la partie en saillie ;
- la au moins une projection, est formée par une languette de centrage, monobloc avec la rondelle de centrage du diaphragme, la au moins une languette de centrage s'étendant de préférence au moins en partie selon la direction axiale du mécanisme d'embrayage ;
- le mécanisme d'embrayage comporte des moyens de rattrapage d'usure adaptés à déplacer, dans une direction axiale du mécanisme d'embrayage, le plateau de pression par rapport au diaphragme, pour maintenir la position embrayée du diaphragme sensiblement constante quelle que soit l'usure de garnitures de friction d'un disque de friction associé au plateau de pression ainsi que de contre-matériaux du plateau de pression et d'un plateau de réaction associé au plateau de pression.

On notera que l'invention n'est pas limitée aux embrayages équipés de moyens de rattrapage d'usure mais est bien adaptée à ce mode de réalisation, dans lequel le diaphragme peut être soumis à des efforts importants.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective, de dessus, d'un mécanisme d'embrayage ;
- la figure 2 est une vue de dessus, du mécanisme d'embrayage de la figure 1 ;
- les figures 3 et 4 sont des demi-vues en coupe du mécanisme d'embrayage de la figure 1, respectivement selon les axes III-III et IV-IV de la figure 2 ;
- la figure 5 est une vue en perspective d'une rondelle d'assistance mise en oeuvre dans le mécanisme d'embrayage de la figure 1 ;
- la figure 6 est une vue de dessus de la rondelle d'assistance de la figure 5 ;
- la figure 7 est une vue en coupe selon la ligne de coupe VII-VII de la rondelle d'assistance de la figure 5 ; et
- la figure 8 est un agrandissement d'un détail de la figure 7 ;
- les figures 9 et 10 sont des vues en perspective d'une rondelle d'assistance selon un autre mode de réalisation.

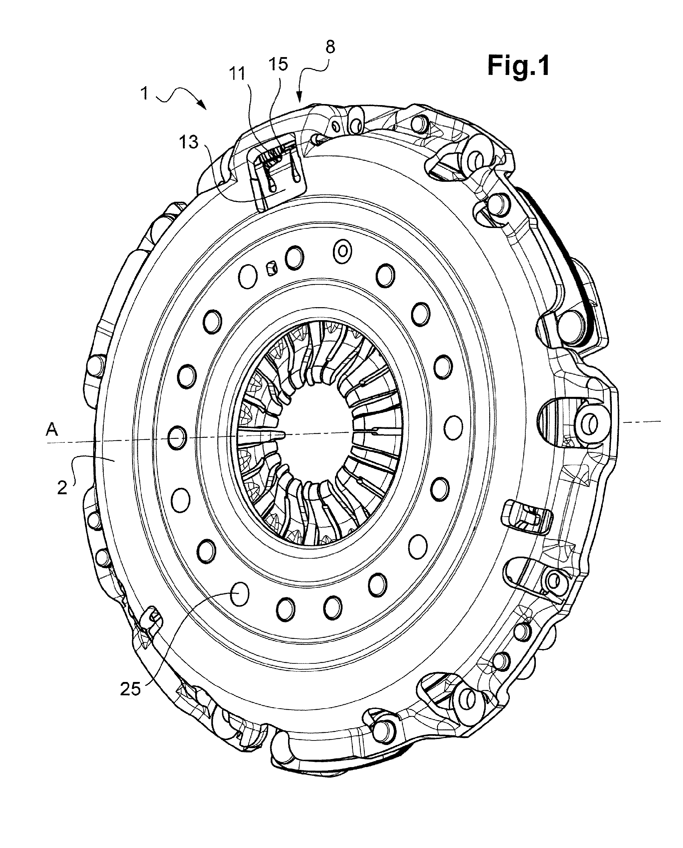

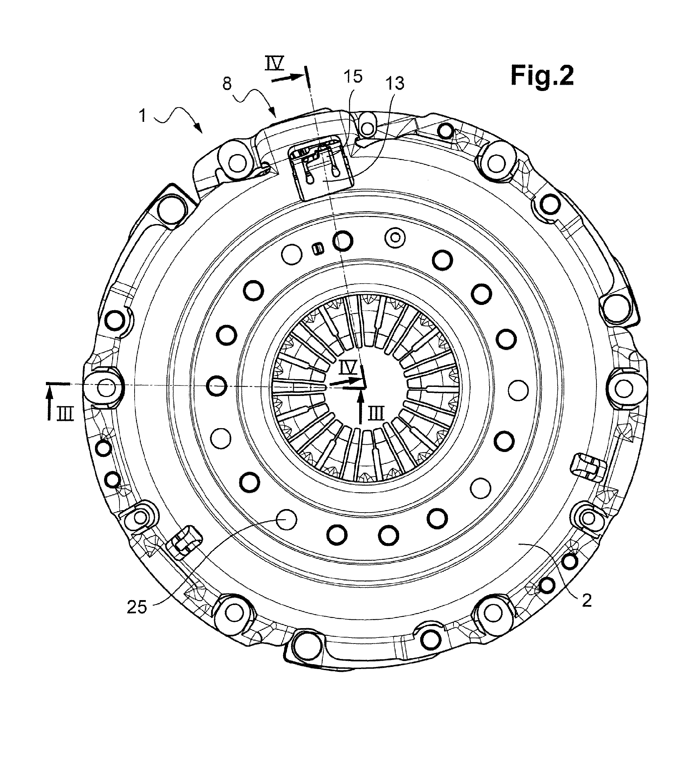

Les figures 1 à 4 illustrent un mécanisme 1 d'embrayage de véhicule automobile, comportant un couvercle 2 de forme générale de révolution, destiné à être relié en rotation avec un volant moteur, non représenté, du véhicule automobile, à l'aide de moyens classiques. Un diaphragme 3, annulaire, déformable élastiquement, est logé dans le couvercle 2. Le couvercle 2 et le diaphragme 3 sont sensiblement coaxiaux, d'axe A direction axiale du mécanisme d'embrayage 1.

Le diaphragme 3 est muni de doigts 4 s'étendant radialement vers l'intérieur. Ces doigts 4 sont repliés axialement de façon à conférer au diaphragme 3 son élasticité.

Le diaphragme 3 est adapté à être actionné par une butée de commande, non représentée, lorsque l'embrayage est assemblé sur le véhicule automobile. Le diaphragme 3 coopère avec un plateau de pression 5 logé dans le couvercle 2 et solidaire en rotation de ce dernier.

Au repos, le diaphragme 3 exerce un effort sur le plateau de pression 5, de façon à enserrer un disque de friction, non représenté, entre le plateau de pression 5 et un plateau de réaction, non représenté, couplant ainsi le disque de friction avec le mécanisme d'embrayage 1. Ceci correspond à la position embrayée du diaphragme et, plus généralement, du mécanisme d'embrayage.

Lorsque la butée de commande est actionnée pour exercer un effort axial sur les doigts 4 du diaphragme 3, elle provoque la déformation élastique du diaphragme 3. Le diaphragme 3 pivote alors de façon à relâcher le plateau de pression 5, libérant ainsi le disque de friction. Ceci correspond à la position débrayée du diaphragme et, plus généralement, du mécanisme d'embrayage.

Plus particulièrement, ici, le diaphragme 3 est articulé autour d'une première 6 et d'une seconde 7 zones d'appui situées sur une face et l'autre d'autre du diaphragme 3. Plus précisément, ici, la première zone d'appui 6 est située entre le diaphragme 3 et le couvercle 2. La seconde zone d'appui 7 est située entre le diaphragme 3 et le plateau de pression 5. En outre, dans le cas représenté, les première 6 et deuxième 7 zones d'appui s'étendent circonférentiellement. En d'autres termes, elles ont une forment s'inscrivant dans un anneau, qui est en l'espèce coaxial avec le diaphragme 3. Ici, les zones d'appui ont ainsi la forme de segments disjoints d'un même anneau. Bien entendu d'autres formes des zones d'appui peuvent être envisagées. Notamment, la zone d'appui peut prendre la forme d'un anneau continue ou d'un unique segment d'anneau.

Classiquement, l'usure, notamment l'usure des garnitures du disque de friction associé au plateau de pression et de contre-matériaux du plateau de pression 5 et d'un plateau de réaction associé, entraîne un rapprochement du plateau de pression 5 vers le plateau de réaction. Sans système de rattrapage d'usure, le diaphragme 3 change alors de position angulaire en position embrayée. Ceci fait varier la force exercée sur le plateau de pression 5 par le diaphragme 3, ainsi que la charge sur la butée d'actionnement pendant les phases de débrayages.

Pour résoudre ces problèmes, le mécanisme d'embrayage 1 est équipé de moyens de rattrapage d'usure 8 essentiellement interposés entre un plateau de pression 5 et le diaphragme 3. Ces moyens de rattrapage d'usure 8 permettent de déplacer le plateau de pression 5 relativement au diaphragme 3 de sorte que la position embrayée du diaphragme demeure sensiblement inchangée quelle que soit l'usure des garnitures du disque de friction associé au plateau de pression et de contre-matériaux du plateau de pression 5 et d'un plateau de réaction associé. Pour ce faire, les moyens de rattrapage d'usure comportent un anneau 9 à rampes circonférentielles qui coopèrent avec des contre-rampes complémentaires du plateau de pression 5. L'anneau 9 à rampes circonférentielles sert également à l'appui, en 10, du diaphragme 3.

Pour maintenir le diaphragme 3 dans une même position embrayée, quelle que soit l'usure des garnitures et des plateaux, les rampes de l'anneau 9 coopèrent avec les contre-rampes aménagées sur le plateau de pression 5. Par « même position embrayée », on entend une position angulaire constante correspondant à une position du plateau de pression en contact, éventuellement via des contre-matériaux associés, avec le disque de friction, éventuellement par ses garnitures. La rotation de l'anneau 9 à rampes, en appui sur les contre-rampes, provoque un décalage axial du cordon d'appui 10 en direction du diaphragme 3. En d'autres termes, on augmente ainsi la distance, mesurée dans la direction axiale A du mécanisme d'embrayage 1, entre le cordon d'appui 10 et la surface de friction du plateau de pression 5, la surface de friction étant adaptée à être en contact avec les garnitures, qui s'usent, du disque de friction. Par « cordon d'appui », on entend le sommet de la zone en saillie de l'anneau 9 à rampes destiné à prendre appui sur le diaphragme 3.

On peut ainsi compenser l'usure des garnitures et contre-matériaux associés de sorte que le diaphragme 3, en position embrayée, conserve son angle d'inclinaison initiale, quelle que soit l'usure de ces garnitures et contre-matériaux associés.

Un organe denté, non visible aux figures, est en outre fixé sur l'anneau à rampes 9 et engrène avec une vis sans fin 11 montée dans une cassette 12 fixée au couvercle 2, l'organe denté étant au droit de la vis sans fin.

La vis sans fin 11 est couplée en rotation avec une roue à rochet 31 coopérant avec un cliquet 13 fixé sur le couvercle 2. La vis sans fin 11 et/ou la roue à rochet 31 sont plaquées par un organe élastique contre une aile de la cassette 12.

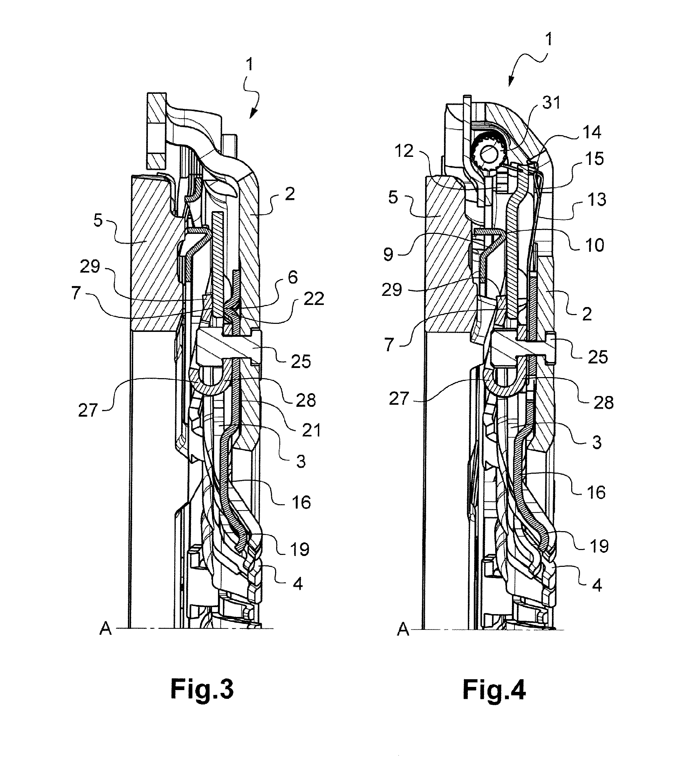

Le cliquet 13 se présente sous la forme d'une lamelle élastique présentant une languette de commande 14, visible sur la figure 4, coopérant avec les dents de la roue à rochet 31 de façon à autoriser la rotation de la roue à rochet 31 dans un sens de rotation, en cas d'usure, et à empêcher la rotation de la roue à rochet dans le sens de rotation contraire, le diaphragme 3 venant en appui contre une languette de rappel 15 du cliquet 13, de manière à déplacer la languette de commande 14 lors de son actionnement. Le cliquet 13 comporte en outre des butées de contrôle, non visibles, destinées à venir en appui sur le couvercle 2 fixe par rapport au plateau de réaction, lors de l'actionnement du diaphragme 3.

De cette manière, en cas d'usure et lors des actionnements successifs du diaphragme 3, le cliquet 13 entraîne la rotation de la roue à rochet 31 et de la vis sans fin 11, cette dernière entraînant la rotation de l'anneau 9 à rampes circonférentielles, par l'intermédiaire de l'organe denté. On augmente ainsi progressivement la distance entre la surface de friction du plateau de pression 5 et le cordon d'appui 10 pour ainsi compenser la diminution de l'épaisseur des garnitures et contre-matériaux des plateaux associés.

Lorsque l'embrayage est équipé de tels moyens de rattrapage d'usure, le diaphragme 3 est généralement soumis à des contraintes et à des efforts mécaniques relativement importants 5 lors des phases d'embrayage et de débrayage.

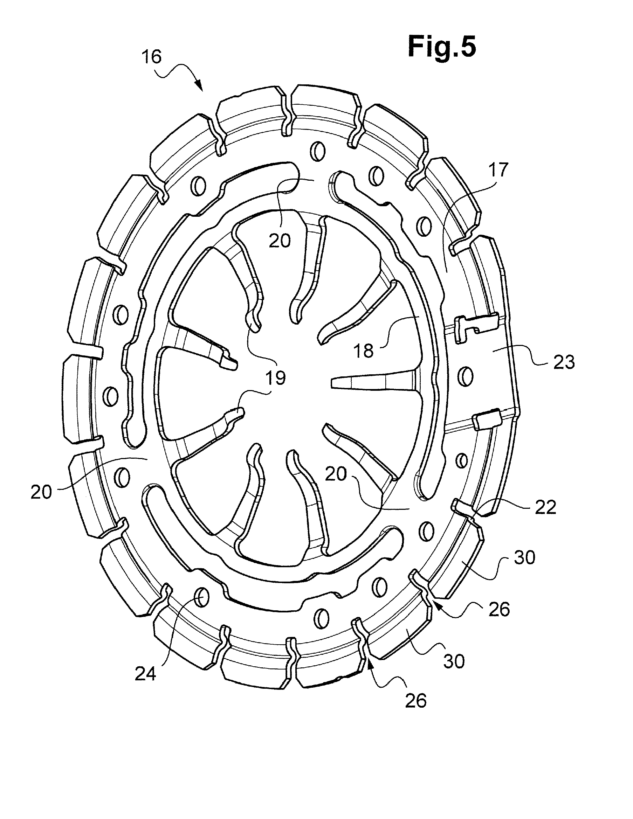

Une rondelle d'assistance 16 est montée axialement entre le couvercle 2 et le diaphragme 3. Cette rondelle d'assistance 16 est mieux visible aux figures 5 à 8. La rondelle d'assistance 16 comporte ici une partie annulaire 17 radialement externe et une partie annulaire 18 radialement interne à partir de laquelle des pattes d'assistance 19, élastiques, s'étendent radialement vers l'intérieur.

Dans la forme de réalisation représentée aux figures, les pattes d'assistance 19 s'étendent entre les doigts radiaux 4 du diaphragme 3 et sont destinées à venir en appui sur la butée d'embrayage servant à l'actionnement du diaphragme 3. Dans une variante non représentée, les pattes d'assistance 19 peuvent prendre appui sur les doigts 4 du diaphragme 3, comme cela est notamment connu du document EP-A-2 048 397, au nom de la Demanderesse. Dans tous les cas, ces pattes d'assistance 19 servent à augmenter l'effort appliqué sur la butée d'actionnement du diaphragme 3, au voisinage de la position débrayée du diaphragme 3. Les parties annulaires radialement interne et externe 17, 18 sont reliées l'une à l'autre par des zones de liaison 20 s'étendant radialement.

La partie annulaire radialement externe 17 comprend une surface sensiblement plane relativement importante, en appui sur une surface plane correspondante 21 du couvercle 2, comme illustrée sur les figures 3 et 4. La rondelle d'assistance 16 comporte également une zone en saillie 22 formant à son sommet la première zone d'appui 6 du diaphragme 3. Cette zone en saillie 22 est formée par emboutissage dans la rondelle d'assistance 16. La rondelle d'assistance 16 formant la première zone d'appui 6 peut être qualifiée de rondelle d'assistance jonc.

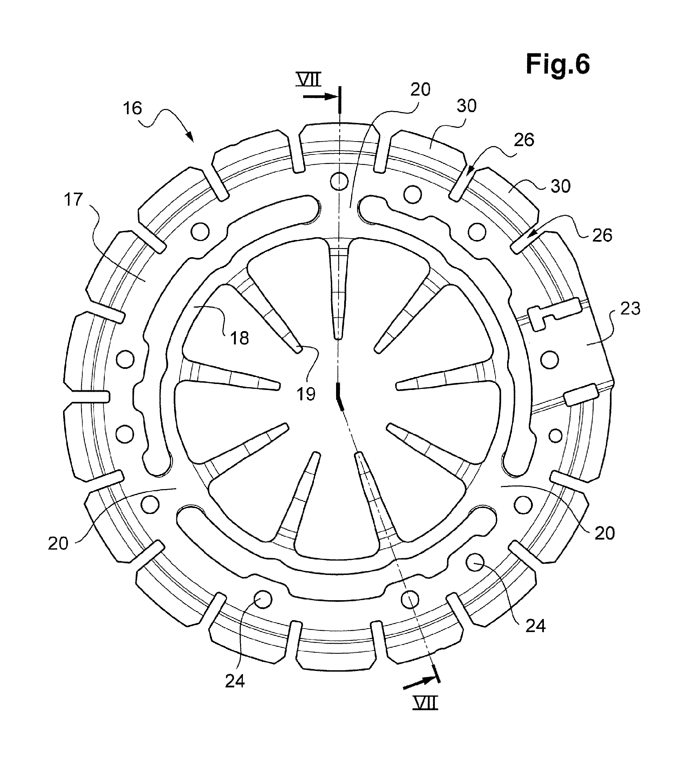

Un dégagement 23, particulièrement visible sur les figures 5 et 6, peut également être formé par emboutissage dans la rondelle d'appui 16, de façon à permettre le passage et l'actionnement du cliquet 13.

La partie annulaire radialement externe 17 comporte en outre des trous 24 servant au montage de rivets 25 permettant la fixation de la rondelle d'assistance 16 sur le couvercle 2.

Dans la forme de réalisation représentée, la zone en saillie 22 est formée sur des languettes 30 disjointes, s'étendant radialement depuis la partie annulaire radialement externe 17, les languettes 30 étant séparées par des lumières radiales oblongues 26. En variante, la zone en saillie peut être formée sur une partie sensiblement annulaire de la rondelle d'assistance, de sorte que la zone en saillie est continue et a la forme d'un unique segment d'anneau, du fait de la présence du dégagement 23, par exemple).

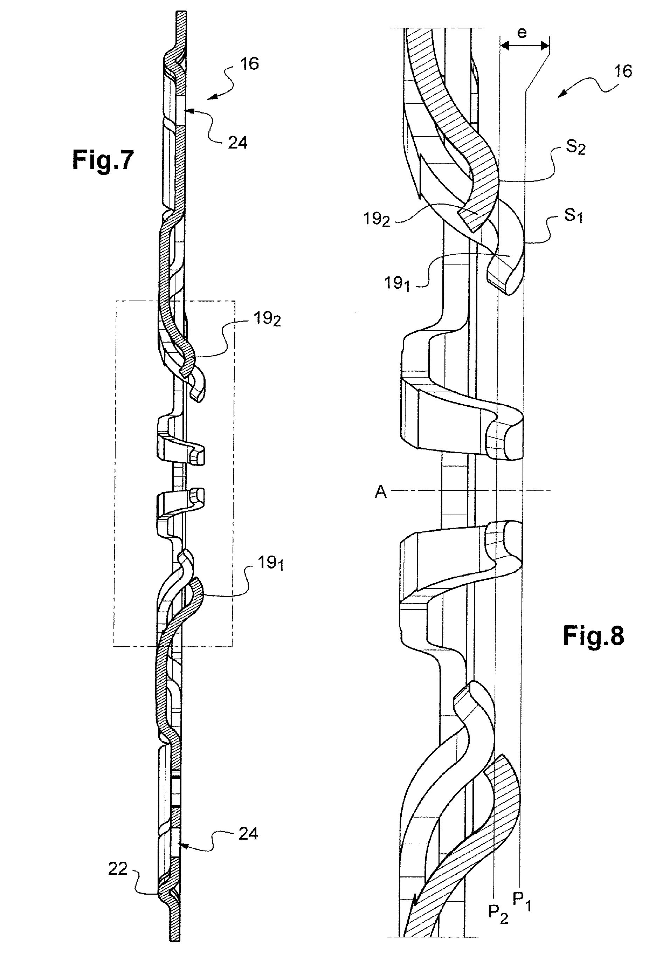

En outre, comme cela est plus particulièrement visible sur la figure 8, les pattes d'assistance 19 sont ici divisées en deux groupes de pattes 19₁, 19₂ dont les sommets S₁, S₂ respectifs sont dans un plan P₁, P₂, respectivement, les plans P₁, P₂ étant décalés d'une distance e dans la direction axiale A du mécanisme d'embrayage 1.

En d'autres termes, la distance des pattes d'assistance aux doigts du diaphragme, qui peut être définie comme la plus grande longueur entre les pattes d'assistance et les doigts du diaphragme mesurée parallèlement à la direction axiale du mécanisme d'embrayage, peut être différente selon les pattes d'assistance. Ainsi, les pattes d'assistance peuvent également être qualifiées de pattes d'assistance étagées.

Ceci permet que l'action des pattes d'assistance soit échelonnée sur la course de la butée d'embrayage, assurant ainsi un meilleur confort d'utilisation et une meilleure compacité du mécanisme d'embrayage. En d'autres termes, la raideur de la rondelle d'assistance présente au moins deux valeurs distinctes non nulles sur la course de la butée d'actionnement.

Ici, la rondelle d'assistance présente neuf pattes d'assistantes dont six ont un sommet destiné à entrer en contact avec la butée d'embrayage plus tôt que le sommet des trois autres pattes d'assistante, durant la course de la butée d'embrayage commandant le débrayage du mécanisme d'embrayage. Bien entendu, cette combinaison n'est qu'un exemple et la rondelle d'assistance 16 peut notamment comporter plus de neuf pattes d'assistance. De même, le nombre de plans dans lesquels sont répartis les sommets des pattes d'assistance peut être supérieur à deux, pour échelonner de manière plus lisse l'action de la rondelle d'assistance.

La seconde zone d'appui pour le diaphragme 3 est formée par des organes d'appui 27 fixés sur le couvercle 2 à l'aide des rivets 25.

Comme illustré aux figures 3 et 4, chaque organe d'appui 27 a une section en C et comporte une première branche 28 de fixation au couvercle 2 et une seconde branche 29 dont l'extrémité libre forme la seconde zone d'appui 7 du diaphragme 3. Chaque organe d'appui 27 est élastique, de sorte que sa seconde branche 29 tend à plaquer le diaphragme 3 en appui contre la zone en saillie 22 de la rondelle d'appui 16.

Ici, la rondelle d'assistance 16 est fixée serrée au couvercle 2 au moyen des rivets 25 qui servent à la solidarisation du diaphragme 3 au couvercle 2, de sorte que la rondelle d'assistance 16 est serrée, par les rivets 25, entre le couvercle 2 et le diaphragme 3. La première branche 28 de l'organe d'appui 27 est interposée entre les collerettes des rivets 25 et la rondelle d'assistance 16. La fixation de la rondelle d'assistance 16 directement sur le couvercle 2 permet d'améliorer la précision de la position axiale des pattes d'assistance 19 par rapport aux doigts 4 du diaphragme 3. La charge vue par la butée d'actionnement est ainsi maîtrisée avec plus de précision, notamment quand les pattes d'assistance 19 sont étagées.

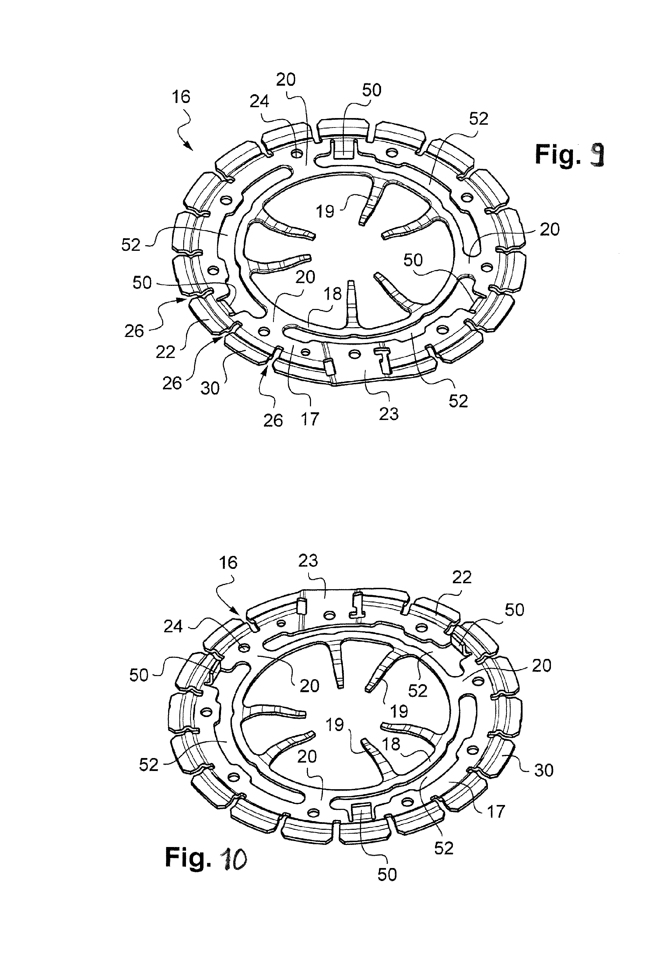

Les figures 9 et 10 présentent l'invention selon un autre mode de réalisation. La rondelle d'assistance 16 forme ici une rondelle de centrage du diaphragme en ce qu'elle présente des projections 50, ici au nombre de trois sans que ce nombre soit limitatif, adaptées à coopérer avec le diaphragme pour limiter les déplacements du diaphragme 3 dans un plan normal à la direction axiale A du mécanisme d'embrayage 1. Les déplacements dans le plan normal à la direction axiale A s'entendent de tous mouvements du diaphragme 3 modifiant la position moyenne du diaphragme 3 dans un tel plan. Ces déplacements comprennent, en particulier :
- toute translation dans un plan normal à la direction axiale A du mécanisme d'embrayage 1, et
- la rotation relative du diaphragme 3 par rapport à la rondelle de centrage du diaphragme, autour de l'axe A du mécanisme d'embrayage 1.
Ces déplacements ne comprennent pas par contre le basculement du diaphragme 3 autour de la première 6 ou de la seconde 7 zone d'appui, puisque ce basculement induit des mouvements de parties du diaphragme essentiellement dans la direction axiale A du mécanisme d'embrayage 1.

Ici, les projections 50 permettent notamment de limiter une translation du diaphragme dans un plan normal à la direction axiale A du mécanisme d'embrayage 1, qui décentrerait le diaphragme par rapport au reste du mécanisme d'embrayage 1, notamment du couvercle 2 et de la butée d'actionnement.

Les projections 50 s'étendent ici sensiblement dans la direction axiale A du mécanisme d'embrayage, la rondelle d'assistance 16 et le diaphragme 3 étant disposés l'un au-dessus de l'autre dans la direction axiale. En fonction de la forme de la rondelle 16 et de sa position relative par rapport au diaphragme 3, il peut être envisagé de former des projections s'étendant dans une direction différente de la direction axiale du mécanisme d'embrayage 1.

Ici, la rondelle 16 est au moins partiellement interposée entre le couvercle 2 et le diaphragme 3, en contact par ses faces opposées avec le couvercle 2 et le diaphragme 3.

Les projections 50 prennent ici la forme de languettes monoblocs avec la rondelle 16, ou « pattes rabattues ». Les languettes peuvent ainsi être réalisées par découpage à la presse, puis pliages. Les languettes sont alors « gagnées » sur les rébus du procédé de découpage. En d'autres termes, les languettes sont ici formées par de la matière qui est normalement découpée de la rondelle 16 et jetée. Ce procédé de réalisation des languettes est ainsi très avantageux d'un point de vue économique. Ici, les rébus du procédés de découpage sur lesquels les languettes sont « gagnées » sont les découpes pour former les jours 52 dans la rondelle 16.

La coopération des languettes 50 avec le diaphragme 3 peut notamment consister en la réception des languettes 50 dans des logements correspondants du diaphragme 3. Il est intéressant alors de prévoir un montage avec jeu réduit des languettes 50 dans les logements. Le jeu entre les languettes 50 et les parois des logements est de préférence de l'ordre de quelques dixièmes de millimètres, notamment compris entre 0,3 et 0,4 mm, pour permettre le fonctionnement normal du diaphragme et notamment son basculement entre ses positions embrayée et débrayée, tout en assurant de manière efficace la fonction consistant à limiter les déplacements relatifs du diaphragme 3 par rapport à la rondelle 16 dans un plan normal à la direction axiale A du mécanisme d'embrayage. De manière plus avantageuse, au lieu de prévoir des logements distincts dans le diaphragme, les logements sont formés par des « pistils » du diaphragme, c'est-à-dire par les différents jeux entre deux doigts 4 voisins du diaphragme 3. Les doigts 4 du diaphragme 3 forment alors les parois du logement recevant la projection ou la languette de la rondelle.

Enfin, les pattes d'assistance 19 de la rondelle d'assistance peuvent être divisées en au moins deux groupes de pattes dont les sommets respectifs sont dans des plans décalés dans la direction axiale A du mécanisme d'embrayage 1. Ceci permet d'échelonner l'action de la rondelle d'assistance sur la toute la course de la butée d'embrayage et d'augmenter l'effort exercé au voisinage de la position débrayée du diaphragme. On assure ainsi un plus grand confort au conducteur en évitant les risques que la pédale d'embrayage reste coincée en position basse de débrayage, même à haut régime moteur.

L'utilisation d'une rondelle d'assistance 16 présentant une surface étendue d'appui sur le couvercle 2 permet de limiter les contraintes mécaniques auxquelles est soumis le couvercle 2. La dégradation de la rondelle d'assistance 16 et/ou du couvercle 2 est ainsi limitée, de façon à garantir le bon positionnement du diaphragme 3 tout au long de la durée de vie du mécanisme d'embrayage 1.

Bien entendu, l'invention n'est pas limitée aux exemples de modes de réalisation décrits ci-avant, mais est susceptible de nombreuses variantes accessibles à l'homme de l'art.

## Revendications

1. Mécanisme d'embrayage (1), notamment pour véhicule automobile, comportant :
- un couvercle (2),
- un plateau de pression (5),
- un diaphragme (3) logé dans le couvercle (2), le diaphragme (3) étant adapté à basculer entre une position embrayée et une position débrayée pour déplacer le plateau de pression (5) par rapport au couvercle (2), le diaphragme (3) pivotant autour d'une première (6) et d'une seconde (7) zones d'appui situées respectivement entre le diaphragme (3) et le couvercle (2) et entre le diaphragme (3) et le plateau de pression (5),
- une rondelle d'assistance (16) avec au moins deux pattes d'assistance (19) déformables élastiquement et destinées à venir en appui sur une butée d'embrayage servant à l'actionnement du diaphragme (3) ou sur des doigts (4) du diaphragme (3) adaptés à coopérer avec la butée d'embrayage, pour augmenter l'effort appliqué sur la butée d'embrayage au voisinage de la position débrayée du diaphragme (3), la rondelle d'assistance (16) étant en appui sur le couvercle (2) et présentant au moins une zone (22) en saillie formant la première zone d'appui (6) du diaphragme (3), les sommets (S₁, S₂) des pattes d'assistance (19₁ ; 19₂), destinés à entrer en contact avec la butée d'embrayage ou des doigts (4) du diaphragme (3), étant répartis dans au moins deux plans (P₁, P₂) décalés dans la direction axiale (A) du mécanisme d'embrayage (1) pour que la rondelle d'assistance (16) présente une raideur étagée sur la course de la butée d'embrayage provoquant le basculement du diaphragme depuis sa position embrayée jusqu'à sa position débrayée.

2. Mécanisme d'embrayage (1) selon la revendication 1, **caractérisé en ce que** la rondelle d'assistance (16) comporte des trous (24) pour le montage de moyens de fixation (25) de ladite rondelle d'assistance (16) sur le couvercle (2).

3. Mécanisme d'embrayage (1) selon la revendication 1 ou 2, **caractérisé en ce que** la zone en saillie (22) est formée par emboutissage.

4. Mécanisme d'embrayage (1) selon l'une des revendications 1 à 3, **caractérisé en ce que** la zone en saillie (22) est de forme annulaire continue ou de la forme d'un unique segment d'anneau.

5. Mécanisme d'embrayage (1) selon l'une des revendications 1 à 3, **caractérisé en ce que** la zone en saillie (22) a la forme de segments d'anneau disjoints.

6. Mécanisme d'embrayage (1) selon la revendication 5, **caractérisé en ce que** les segments d'anneau disjoints de la zone en saillie (22) sont formés par des languettes (30) disjointes, s'étendant radialement vers l'extérieur depuis une partie annulaire radialement externe (17) de la rondelle d'assistance (16), dans laquelle sont formées, le cas échéant, les trous (24) pour le montage de moyens de fixation (25) de la rondelle d'assistance (16).

7. Mécanisme d'embrayage (1) selon l'une quelconque des revendications précédentes, dans lequel la seconde zone d'appui est formée par au moins un organe d'appui (27) fixé au couvercle (2).

8. Mécanisme d'embrayage (1) selon la revendication 7, dans lequel l'organe d'appui (27) a une section en C et comporte une première branche (28) de fixation au couvercle (2) et une seconde branche (29) dont l'extrémité libre forme la seconde zone d'appui du diaphragme (3).

9. Mécanisme d'embrayage (1) selon la revendication 8, dans lequel l'organe d'appui (27) est élastique, de sorte que sa seconde branche (29) tend à plaquer le diaphragme (3) en appui contre la zone en saillie (22) de la rondelle d'assistance (16).

10. Mécanisme d'embrayage (1) selon l'une quelconque des revendications précédentes, dans lequel la rondelle d'assistance (16) est fixée serrée au couvercle (2) au moyen de rivets (25), de préférence de rivets (25) de solidarisation du diaphragme (3) sur le couvercle (2), de sorte que la rondelle d'assistance (16) est de préférence serrée entre le couvercle (2) et le diaphragme (3) par ses faces opposées par les rivets (25), la première branche (28) de l'organe d'appui (27) étant interposée entre les collerettes des rivets (25) et la rondelle d'assistance (16) le cas échéant.

11. Mécanisme d'embrayage (1) selon l'une quelconque des revendications précédentes, comportant des moyens de rattrapage d'usure (8) adaptés à déplacer, dans une direction axiale (A) du mécanisme d'embrayage (1), le plateau de pression (5) par rapport au diaphragme (3), pour maintenir la position embrayée du diaphragme (3) sensiblement constante quelle que soit l'usure de garnitures d'un disque de friction associé au plateau de pression (5) et/ou de contre-matériaux du plateau de pression (5) et d'un plateau de réaction associé.

12. Mécanisme d'embrayage (1) selon la revendication 1, **caractérisé en ce que** la rondelle d'assistance (16), fixée au couvercle (2), présente au moins une projection (50) adaptée à coopérer avec le diaphragme (3) pour limiter les déplacements du diaphragme (3) dans un plan normal à la direction axiale (A) du mécanisme d'embrayage (1).

13. Mécanisme d'embrayage (1) selon la revendication 12, dans lequel la au moins une projection (50) s'étend depuis une partie de la rondelle d'assistance (16) radialement interne par rapport à la partie en saillie (22).

14. Mécanisme d'embrayage (1) selon la revendication 13, dans lequel la au moins une projection est formée par une languette de centrage (50), monobloc avec la rondelle d'assistance (16), la au moins une languette de centrage (50) s'étendant de préférence au moins en partie selon la direction axiale (A) du mécanisme d'embrayage.
